# EUROPEAN PATENT SPECIFICATION

(11) **EP 2 617 636 B1**
(45) Date of publication and mention of the grant of the patent: **10.01.2018**
(21) Application number: 11824702.2
(22) Date of filing: 12.05.2011
(51) Int. Cl.: B62M 6/50, B60L 7/10, B60T 8/17, B62L 5/16, B62K 23/08, B62L 1/00, B62L 5/00

(54) **ELECTRIC BICYCLE**
ELEKTRISCHES FAHRRAD
BICYCLETTE ÉLECTRIQUE

(30) Priority: 16.09.2010 JP 2010207396
(43) Date of publication of application: 24.07.2013
(73) Proprietor: Panasonic Corporation, Osaka 571-8501 (JP)
(72) Inventor: EDATSUNE, Masamitsu, Osaka-shi, Osaka 540-6207 (JP); YOSHIMURA, Masaya, Osaka-shi, Osaka 540-6207 (JP)
(74) Representative: Grünecker Patent- und Rechtsanwälte PartG mbB
(86) International application number: PCT/JP2011/002644
(87) International publication number: WO 2012/035682

(56) References cited:
- EP-A1- 2 218 635
- WO-A1-2007/029620
- JP-A- 7 215 259
- JP-A- 9 286 377
- JP-A- 11 180 369
- NL-C2- 2 001 292
- US-A- 4 637 274
- US-A1- 2004 084 238

## Description

### Technical Field

The present invention relates to an electric bicycle that can be driven by an auxiliary driving force generated by an electric motor in addition to human power generated by a pedal force from pedals, and can perform a regenerative braking operation (regeneration operation and braking operation) or a braking operation (only a braking operation) by means of the electric motor.

### Background Art

A known electric bicycle includes a storage battery, e.g., a battery and an electric motor fed with power from the storage battery. The electric bicycle detects a pedal force to a pedal by means of a pedal force detector such as a torque sensor, and can be smoothly driven uphill by adding an auxiliary driving force (assistance force) of the electric motor to human power generated by the pedal force. For such an electric bicycle, a configuration for regenerative control on an electric motor during a brake lever operation is also known.

For example, in techniques disclosed in Patent Literatures 1 to 3, an electric bicycle provided with an electric motor for generating an auxiliary driving force includes a switch and a sensor that detect an operation of a brake lever attached to a handlebar. When the brake lever is operated to drive a front-wheel braking device or a rear-wheel braking device, regenerative control is performed on the electric motor to perform a braking operation in response to the regenerative control on the electric motor and a regeneration operation for charging a battery by using the electric motor as a generator.

Document EP 2 218 635 represents the closest prior art, and discloses an electric bicycle having all the features of the preamble of claim 1.

### Citation List

### Patent Literatures

Patent Literature 1: Japanese Patent Laid-Open No. 2003-204602
Patent Literature 2: Japanese Utility Model Laid-Open No. 5-75086
Patent Literature 3: Japanese Patent Laid-Open No. 2010-28970

### Summary of Invention

### Technical Problem

In a conventional electric bicycle allowing a regenerative braking operation and a braking operation of an electric motor, braking requires a brake lever operation, disadvantageously preventing a rider from applying brakes while firmly gripping a handlebar.

The present invention has been devised to solve the problem. An object of the present invention is to provide an electric bicycle that allows a rider to satisfactorily apply brakes while firmly gripping a handlebar.

### Solution to Problem

The present invention relates to an electric bicycle as recited in claim 1. Further embodiments are defined in the remaining dependent claims. In order to solve the problem, an electric bicycle according to the present invention includes: an electric motor that generates an auxiliary driving force; a coaster brake that is disposed in the hub of a rear wheel and is activated when pedals are rotated in a direction opposite to forward travel; and a control unit that causes the electric motor to perform one of a regenerative braking operation, a braking operation, and a stopping operation when the coaster brake is activated.

With this configuration, in the case where the pedals are rotated backward during riding (forward travel), the coaster brake is activated and the control unit causes the electric motor to perform a regenerative braking operation or a braking operation for applying brakes, or a stopping operation. Thus, a rider can activate the coaster brake so as to apply brakes while firmly gripping a handlebar. In the case where the electric motor is caused to perform a regenerative braking operation or a braking operation when the coaster brake is activated, brakes can be applied by the regenerative braking operation or the braking operation of the electric motor. The stopping operation of the electric motor during the activation of the coaster brake can apply brakes while reducing power consumption.

Preferably, the electric motor is disposed in the hub of a front wheel, and the control unit causes the electric motor to perform one of a regenerative braking operation and a braking operation when the coaster brake is activated. With this configuration, when the pedals are rotated backward, the coaster brake applies a brake to the rear wheel while the regenerative braking operation and the braking operation of the electric motor apply a brake to the front wheel. Thus, the electric bicycle can be satisfactorily braked in a stable position by the braking operation performed on the rear wheel by the coaster brake and the regenerative braking operation or the braking operation performed on the front wheel by the electric motor.

Another feature of the invention is that the electric bicycle further includes a reverse rotation detector that detects a reverse rotation of the pedal or a phenomenon corresponding to the reserve rotation. The reverse rotation detector is preferably one of a torque sensor attached to the location of a crank shaft, a crank rotation sensor that detects the rotation direction of the crank shaft, a torque sensor that is attached to a rear wheel body on the hub of the rear wheel, a rear wheel body rotation sensor that detects the rotation direction of the rear wheel body attached to the hub of the rear wheel, a tension sensor that detects the tension of an endless driving force transmitting member for transmitting a pedal force on the pedal to the rear wheel, a hub shaft torque sensor that detects the torque of the hub shaft of the rear wheel, and an acceleration sensor that detects the acceleration of the electric bicycle.

Another feature not part of the invention invention is a pedal force detector that detects a pedal force on the pedal attached to a crank, the pedal force detector also detecting a rotation of the crank in a direction opposite to forward travel.

With this configuration, the pedal force detector for detecting a pedal force on the pedal also acts as a detector for detecting a rotation of the pedal in a direction opposite to forward travel. The manufacturing cost can be reduced accordingly. In other words, a conventional electric bicycle detects a pedal force on a pedal by means of a pedal force detector and thus further requires a switch or a sensor for detecting a brake lever operation, disadvantageously leading to higher manufacturing cost. The present invention eliminates the need for a switch or a sensor for detecting a brake lever operation, thereby reducing the manufacturing cost accordingly.

The electric bicycle may further include a storage battery as a power supply of the electric motor of the present invention. The storage battery may be charged by the regenerative braking operation of the electric motor. The electric motor of the present invention may be located at an intermediate position between the front wheel and the rear wheel.

The electric bicycle further includes a reverser rotation detector that detects a reverse rotation of the pedal. With this configuration, when the pedals are rotated backward, the application of an extremely large load to the rider's feet through the pedals can be prevented, thereby reducing a load to the rider's feet and excessive energy. Moreover, a threshold value is set for a pedal force applied when the pedals are rotated backward. The control unit may immediately stop the electric motor when a reserve rotation of the pedal is detected with a pedal force larger than the threshold value.

### Advantageous Effects of Invention

The present invention includes a coaster brake that is disposed in the hub of a rear wheel and is activated when pedals are rotated in a direction opposite to forward travel, and a control unit that causes the electric motor to perform one of a regenerative braking operation, a braking operation, and a stopping operation when the coaster brake is activated. Thus, a rider can simultaneously apply brakes by means of the coaster brake and the regenerative braking operation or the braking operation of the electric motor while firmly gripping a handlebar, thereby improving safety.

Since the electric motor is disposed in the hub of a front wheel, the electric bicycle can be braked in quite a stable position by the brake applied on the rear wheel by the coaster brake and the regenerative braking operation or the braking operation of the electric motor on the front wheel, thereby improving stability during braking.

A pedal force detector detects a pedal force on the pedal attached to a crank. The pedal force detector detects a rotation of the crank in a direction opposite to forward travel. Thus, the pedal force detector for detecting a pedal force on the pedal also acts as a detector for detecting a rotation of the pedal in a direction opposite to forward travel, thereby reducing the manufacturing cost accordingly.

Furthermore, a reverse rotation detector is provided for detecting a reverse rotation of the pedal. When a reserve rotation of the pedal is detected, the control unit immediately stops the electric motor. With this configuration, when the pedals are rotated in a direction opposite to forward travel, a load to the rider's feet and excessive energy can be reduced.

### Brief Description of Drawings

[FIG. 1] FIG. 1 is a general side view of an electric bicycle according to an embodiment of the present invention.
[FIG. 2] FIG. 2 is a partially cut-away side view of the electric bicycle.
[FIG. 3] FIG. 3 is a longitudinal sectional view illustrating the hub of the front wheel of the electric bicycle.
[FIG. 4] FIG. 4 is a cross-sectional view illustrating a control unit on the front wheel of the electric bicycle.
[FIG. 5] FIG. 5 is an exploded perspective view illustrating the hub of the rear wheel of the electric bicycle.
[FIG. 6A] FIG. 6A is a longitudinal sectional view illustrating the hub of the rear wheel of the electric bicycle, the rear wheel being rotated by a pedal force on a pedal.
[FIG. 6B] FIG. 6B is a longitudinal sectional view illustrating the hub of the rear wheel of the electric bicycle in a state in which pedals are rotated in a direction opposite to forward travel to activate a coaster brake or the pedals stop rotating during riding.
[FIG. 7] FIG. 7 is a general side view of an electric bicycle according to another embodiment of the present invention.
[FIG. 8] FIG. 8 is a general side view of an electric bicycle according to still another embodiment of the present invention.
[FIG. 9] FIG. 9 is a partially cut-away side view of the electric bicycle.
[FIG. 10] FIG. 10 is a cross-sectional view illustrating a control unit on the front wheel of the electric bicycle.
[FIG. 11] FIG. 11 is a side view illustrating the principle part of the electric bicycle.
[FIG. 12] FIG. 12 shows the relationship between a pedal force of the electric bicycle and a current of an electric motor.
[FIG. 13] FIG. 13 shows the relationship between a pedal force of the electric bicycle and a current of the electric motor according to a comparative example.

### Description of Embodiments

Electric bicycles according to embodiments of the present invention will be described below with reference to the accompanying drawings.

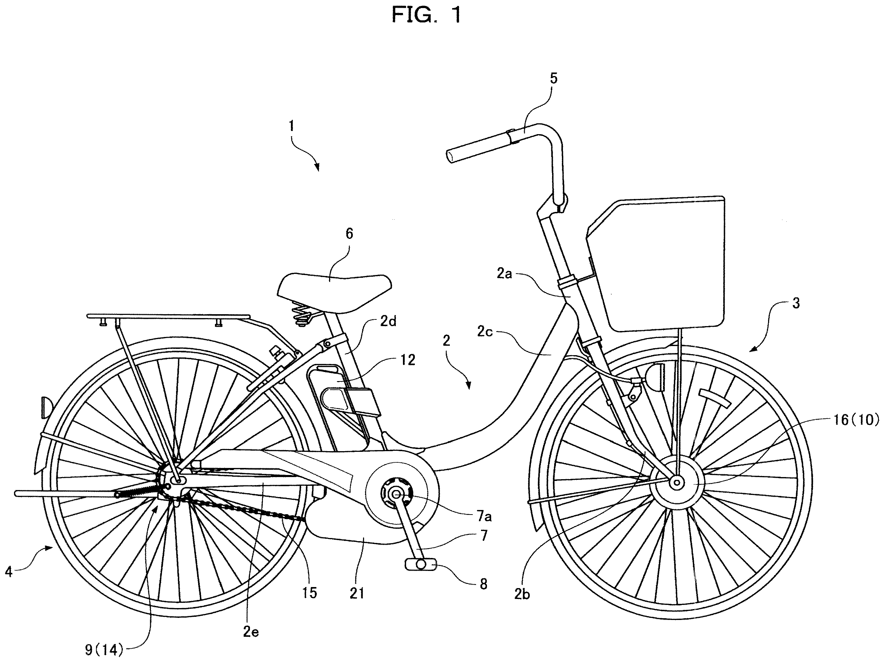

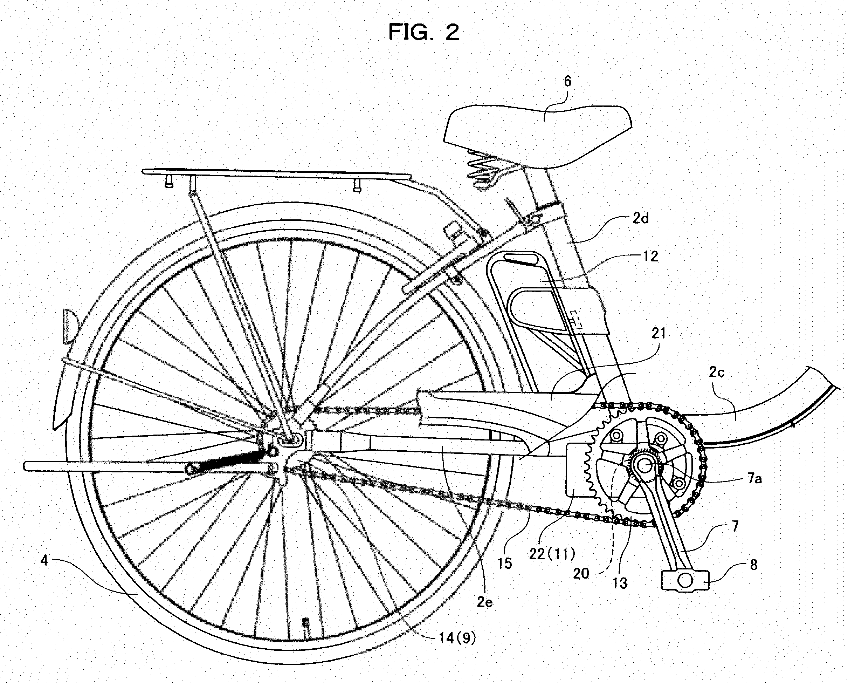

As illustrated in FIGS. 1 and 2, reference numeral 1 denotes an electric bicycle. The electric bicycle 1 includes a head pipe 2a, a front fork 2b, a main pipe 2c, a seat pipe 2d, a metal frame 2 including a chain stay 2e, a front wheel 3 rotatably attached to the lower end of the front fork 2b, a rear wheel 4 rotatably attached to the rear end of the chain stay 2e, a handlebar 5 for steering the front wheel 3, a saddle 6, a crank 7, pedals 8, an electric motor 10 that generates an auxiliary driving force (assistance force), a control part 11 that electrically controls the electric motor 10 and so on, a battery 12 including a secondary battery for supplying driving power to the electric motor 10, a manual operator (not shown) that is attached to, for example, the handlebar 5 operably by a rider, a front sprocket (so-called crank gear) 13 that is attached as a human power output ring body so as to rotate with the crank 7, a rear sprocket (so-called rear wheel gear) 14 that is attached as a rear ring body to a hub (also called a rear hub) 9 of the rear wheel 4, a chain 15 serving as an endless driving force transmitting member looped over the front sprocket 13 and the rear sprocket 14, and a chain cover 21 that laterally covers the chain 15 and so on. The battery 12 is an example of a storage battery. A secondary battery is preferable. A capacitor may be used as another example of a storage battery.

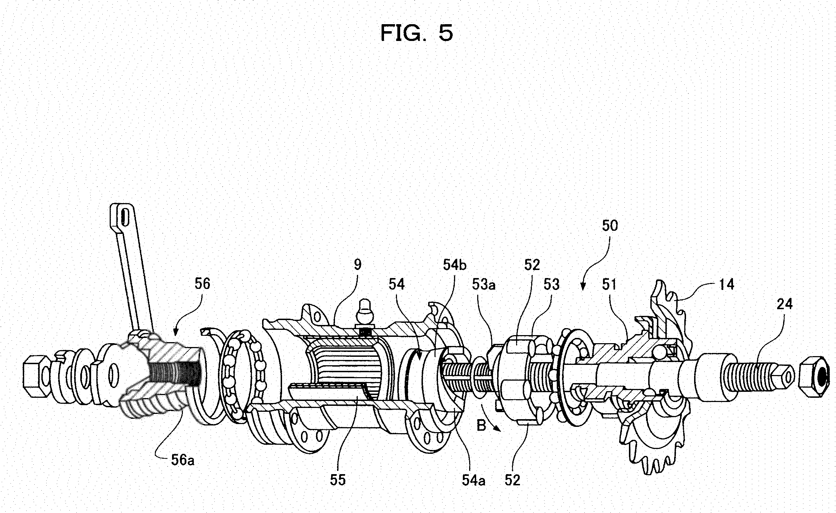

The electric bicycle 1 is not provided with braking devices such as a rim brake, which presses brake shoes to the rim of the front wheel in response to an operation of a brake lever, and a band brake or a roller brake on a rear wheel. Instead of these braking devices, the rear hub 9 is provided with a coaster brake 50 as illustrated in FIG. 5, enabling braking when the pedals 8 are rotated opposite to the rotation direction of forward travel.

The pedals 8 are rotatably attached to two ends of the crank 7 and receive a pedal force as human power. The pedals 8 having received the pedal force rotate the crank 7 about a crank shaft 7a to transmit a rotary force to the rear wheel 4 through the front sprocket 13, the chain 15, and the rear sprocket 14, thereby rotating the rear wheel 4.

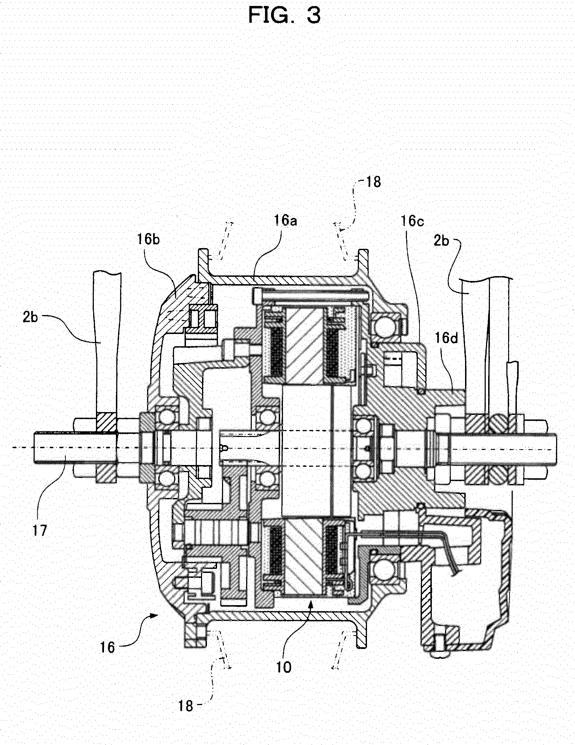

As illustrated in FIG. 3, in the electric bicycle 1 according to the present embodiment, the electric motor 10 is contained in a metal hub (hereinafter, will be also called a front hub) 16 located at the center of the front wheel 3. Specifically, the outer case of the front hub 16 includes a metal rotating part 16a that is attached to the inner ends of spokes and rotates with, for example, the tire of the front wheel 3, and metal fixed parts 16b, 16c, and 16d that are not rotatable like a hub shaft 17 of the front wheel 3. The electric motor 10 is contained in the front hub 16 including the rotating part 16a and the fixed parts 16b to 16d. Reference numeral 18 in FIG. 3 denotes the spokes of the front wheel 3.

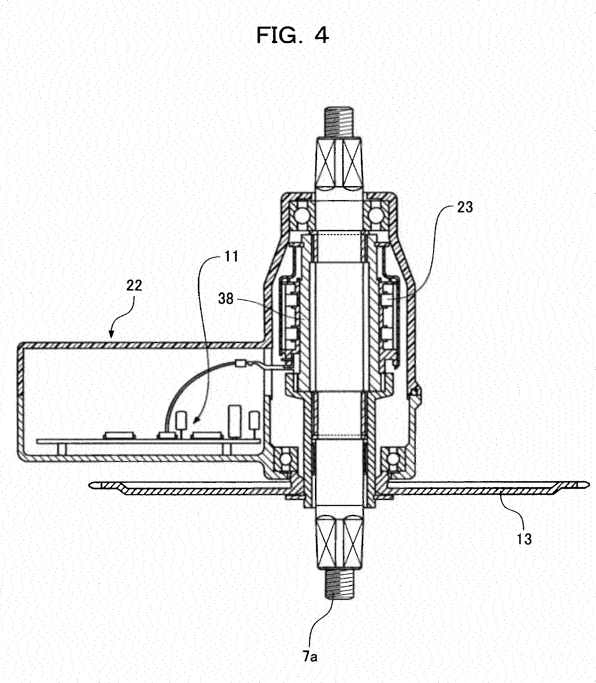

As illustrated in FIGS. 2 and 4, the control part 11 is disposed in a control unit 22 that is hung and supported in the lower central part of the electric bicycle 1 by a suspension bracket or the like. The control part 11 includes a control board for controlling the constituent elements (including the electric motor) of the electric bicycle 1, and a memory circuit. The crank shaft 7a laterally penetrates the front part of the control unit 22 in a rotatable manner. The front sprocket 13 is attached to one end of the crank shaft 7a so as to rotate with the crank shaft 7a.

Furthermore, a pedal force detector 23 and a traveling speed detector (not shown) are provided on the outer surface of the crank shaft 7a in the control unit 22. The pedal force detector 23 includes a torque sensor that detects the torsion of the crank shaft 7a (specifically, a crank shaft outer cylinder 38 rotating with the crank shaft 7a) to detect a pedal force applied to the pedal 8, and the traveling speed detector detects the speed of the electric bicycle 1 by detecting the rotation speed of the crank shaft 7a. In this case, torque applied to the pedal 8 may be detected by the pedal force detector 23 that is a magnetostrictive torque sensor (made of a material that is varied in magnetic permeability by an external force, and a change of magnetic permeability is read as a flux change by a search coil). The pedal force detector 23 can detect the direction of a pedal force as well as the magnitude of the pedal force. Specifically, for example, the pedals 8 and the crank 7 in the state of FIG. 2 rotate clockwise so as to move (drive) forward the electric bicycle 1 by means of the pedal force of a rider. In this state, a positive output is outputted from the pedal force detector 23 including the torque sensor. In the case where the rider rotates the pedals 8 and the crank 7 backward (counterclockwise), a negative output is outputted from the pedal force detector 23 including the torque sensor. In the case where the pedals 8 and the crank 7 are not rotated, the pedal force detector 23 outputs a predetermined value ranging from 0 to a small absolute value. Thus, when the rider rotates the pedals 8 and the crank 7 backward (counterclockwise), a negative output is outputted, allowing the rider to recognize the reverse (counterclockwise) rotation of the pedals 8 and the crank 7.

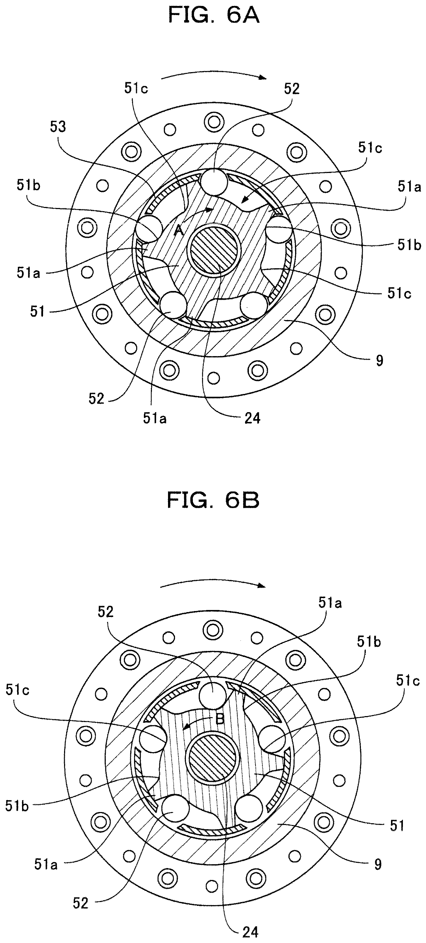

FIG. 5 is an exploded perspective view illustrating the hub (rear hub) 9 of the rear wheel 4 provided with the coaster brake 50. FIGS. 6A and 6B are cross-sectional views illustrating the rear hub. In the present embodiment, the "roller-clutch driven" coaster brake 50 is bicycle coaster hub mechanism B type defined by JISD9419. The coaster brake 50 is disposed in a hub body 9a that forms the outer case of the rear hub 9 and rotates with the rear wheel. As illustrated in FIGS. 5, 6A, and 6B, the coaster brake 50 is rotatably fit onto a hub shaft 24 of the rear wheel 4. The coaster brake 50 includes: a driver 51 that has one end (right end in FIG. 5) fixed into the rear sprocket 14 so as to rotate with the rear sprocket 14 and the other end (left end in FIG. 5) provided with protrusions 51a, large-diameter cam surfaces 51b, and small-diameter cam surfaces 51c at proper intervals in a circumferential direction as illustrated in FIGS. 6A and 6B; a cam base 53 that includes rollers 52 circumferentially arranged at proper intervals on the outer surface of the cam base 53 and a cam portion 53a protruding along an axial direction (left side in FIG. 5); an expander 54 that includes a tilted cam portion 54a engaged with the cam portion 53a of the cam base 53 and a tapered surface 54b; a brake shoe 55 that can expand and shrink in the diameter direction and slidably comes into contact with the inner surface of the rear hub 9; and a brake cone 56 that has a tapered surface 56a capable of moving the brake shoe 55 to the outside.

When the pedals 8 are rotated in a normal traveling direction (rotation direction of forward travel), the driver 51 is rotated in direction A in FIG. 6A through the chain 15, the rear sprocket 14, and so on. Accordingly, the rollers 52 are pressed to the outside by the large-diameter cam surfaces 51b of the driver 51. Hence, the rollers 52 are sandwiched between the driver 51 and the hub body 9a of the rear hub 9 while being strongly pressed, allowing the hub body 9a to be integrated with the driver 51 so as to rotate the overall rear wheel 4. At this point, the cam portion 53a of the cam base 53 is in contact with a thin portion of the tilted cam portion 54a of the expander 54 in the axial direction, and the expander 54 is located on the right side in FIG. 5. Thus, the tapered surface 54b of the expander 54 is not in contact with the brake shoe 55, and the brake shoe 55 remains separated from the inner surface of the rear hub 9 without being increased in diameter.

In the case where the pedals 8 are rotated opposite to the rotation direction of forward travel so as to rotate the rear sprocket 14 backward through the chain 15, the driver 51 is rotated in direction B like the rear sprocket 14 as illustrated in FIG. 6B. Thus, the rollers 52 come into contact with the small-diameter cam surfaces 51c of the driver 51 so as to form gaps between the rollers 52 and the inner surface of the hub body 9a. However, when the driver 51 rotating in the direction B rotates the cam base 53 in the direction B through the rollers 52, the expander 54 including the tilted cam portion 54a in contact with the cam portion 53a of the cam base 53 is moved to the left in FIG. 5. Hence, the brake shoe 55 is pressed by the tapered surface 54b of the expander 54 and the tapered surface 56a of the brake cone 56 from two sides so as to increase in diameter, and thus the brake shoe 55 is strongly pressed to the inner surface of the hub body 9a of the rear hub 9. This enables braking on the rear wheel 4 through the rear hub 9.

In the case where the pedals 8 are stopped during riding so as to stop the rotation of the rear sprocket 14 through the chain 15, a force for rotating the driver 51 in the direction A in FIG. 6A is eliminated. Thus, as illustrated in FIG. 6B, the rollers 52 come close to the small-diameter cam surfaces 51c of the driver 51 so as to form gaps between the rollers 52 and the inner surface of the rear hub 9. Since the driver 51 is not rotated, the cam base 53 is not rotated, keeping the location of the expander 54 on the right side in FIG. 5. The tapered surface 54b of the expander 54 does not come into contact with the brake shoe 55, and the brake shoe 55 is separated from the inner surface of the rear hub 9 without being increased in diameter. This precludes the transmission of a rotary force of the rotating rear hub 9 to the driver 51 and the rear sprocket 14, causing idling in a freewheeling condition as in the case where a free wheel (one way clutch) is disposed between the driver 51 and the rear sprocket 14.

With this configuration, in the case where a power supply switch provided on the manual operator is operated by a rider to apply an auxiliary driving force in an assistance state, the control part 11 performs the following control operation:

When a rider presses the pedals 8 in the rotation direction of forward travel, the pedal force detector 23 detects the pedal force and the rotation direction of the pedals 8 (crank shaft 7a) and controls the electric motor 10 so as to output an auxiliary driving force according to the pedal force and the rotation direction. When the traveling speed of the electric bicycle 1 exceeds a predetermined speed, the amount of an applied auxiliary driving force gradually decreases. The auxiliary driving force is controlled so as not to be applied at an upper limit traveling speed or higher.

In the case where the rider stops rotating the pedals 8 during riding, a pedal force of 0 or nearly 0 is obtained. This state is detected by the pedal force detector 23, allowing the control part 11 to control, for example, the electric motor 10 so as not to apply an auxiliary driving force.

In the case where the rider rotates the pedals 8 opposite to the rotation direction of forward travel during riding, the pedal force detector 23 detects a reverse rotation of the crank shaft 7a and a pedal force at that time. A signal of this information is inputted to the control part 11. When receiving the signal of information on the reverse rotation of the crank shaft 7a from the pedal force detector 23, the control part 11 controls the electric motor 10 so as to perform a regenerative braking operation. Thus, the front wheel 3 provided with the electric motor 10 in the hub 16 is braked by the regenerative braking operation of the electric motor 10. Preferably, power generated by the regenerative braking operation of the electric motor 10 is controlled so as to increase with a pedal force, causing the regenerative braking operation to apply a larger braking force. The method of control is not particularly limited. The regeneration operation of the electric motor 10 may be only switched from OFF state to ON state when a pedal force reaches a predetermined value. Regenerated power is used to charge the battery 12.

With this configuration, when a rider presses the pedals 8 in the rotation direction of forward travel, a pedal force acting as human power rotates the rear wheel 4 through the chain 15, and an auxiliary driving force corresponding to the pedal force is applied to rotate the front wheel 3, facilitating riding on an uphill road, and so on.

In the case where the rider stops rotating the pedals 8 during riding, an auxiliary driving force is not applied and the coaster brake 50 is idled, allowing smooth coasting.

In the case where the rider rotates the pedals 8 opposite to the rotation direction of forward travel during riding, the coaster brake 50 is activated to apply a brake to the rear wheel 4, and the regeneration operation of the electric motor 10 applies a brake to the front wheel 3. The front wheel 3 is braked in addition to the rear wheel 4, allowing a more stable brake than a brake only on the rear wheel 4. In this case, the larger a pedal force, the larger a braking force applied by the regenerative braking operation of the electric motor 10. The front wheel 3 and the rear wheel 4 are more preferably stopped with a stable ratio of braking forces between the front wheel 3 and the rear wheel 4, enabling a more satisfactory brake.

Since the coaster brake 50 is used in the electric bicycle 1, the pedals 8 are rotated with feet opposite to forward travel while the regenerative braking operation of the electric motor 10 is enabled. Thus, the coaster brake 50 is activated for braking and the regenerative braking operation of the electric motor 10 can apply a brake while the handlebar 5 is firmly gripped with hands, achieving higher safety than in braking with a brake lever.

The rear wheel 4 is braked only by the coaster brake 50, whereas the front wheel 3 is braked only by the regenerative braking operation of the electric motor 10. Thus, an imbalance between the braking forces of the front wheel 3 and the rear wheel 4 can be prevented (a braking force applied by the regenerative braking operation of the electric motor 10 is adjusted and controlled according to a pedal force) or the imbalance can be minimized (only the regeneration operation of the electric motor 10 is simply turned on/off according to a pedal force). Hence, the front wheel 3 and the rear wheel 4 can be highly satisfactorily braked in a stable state, keeping high safety.

With this configuration, the pedal force detector 23 including the torque sensor for detecting a pedal force on the pedal 8 also acts as a detector for detecting a rotation of the pedal 8 opposite to forward travel. Accordingly, the number of components and the manufacturing cost can be reduced. The conventional electric bicycle detects a pedal force on the pedal by means of the pedal force detector and thus further requires a switch or a sensor for detecting a brake lever operation, disadvantageously leading to higher manufacturing cost. The present invention eliminates the need for a switch or a sensor for detecting a brake lever operation, thereby reducing the manufacturing cost accordingly.

In the present embodiment, the coaster brake 50 is "roller-clutch driven" type. The coaster brake 50 is not particularly limited and thus may be "tapered-cone driven type" or "multi-disc type".

In the present embodiment, the pedal force detector 23 including the torque sensor for detecting a pedal force on the pedal 8 acts as a detector for detecting a rotation of the pedal 8 opposite to forward travel (that is, a coaster braking operation detector acting as a detector for detecting an operation allowing a rider to activate the coaster brake 50). The detector is not particularly limited. Specifically, the pedal force detector 23 including the torque sensor may be replaced with, as a reverse rotation detector for detecting a reverse rotation of the pedal 8, one of a crank rotation sensor that detects the rotation direction of the crank 7, a torque sensor that is attached to the rear sprocket 14 serving as a rear wheel body attached to the hub 9 of the rear wheel 4, a rear wheel body rotation sensor that detects the rotation direction of the rear sprocket 14 serving as a rear wheel body attached to the hub 9 of the rear wheel 4, a tension sensor that detects the tension of the chain 15 serving as an endless driving force transmitting member for transmitting a pedal force on the pedal 8 to the rear wheel 4, a hub shaft torque sensor that detects the torque of the hub shaft of the rear wheel 4, and an acceleration sensor that detects the acceleration of the electric bicycle.

The crank rotation sensor can detect the rotation direction of the crank 7. The crank rotation sensor can easily detect a reverse rotation of the crank 7 without high precision. Thus, the crank rotation sensor used as the reverse rotation detector can advantageously reduce the manufacturing cost. Instead of the sensor for detecting the rotation direction of the crank 7, a mechanical sensor or an electric sensor simply capable of detecting a reverse rotation of the crank 7 may be provided near the crank shaft or on the bearing part of the crank shaft. Alternatively, a mechanical sensor or an electric sensor having a similar configuration may be attached to the rear sprocket 14. The tension sensor that detects the tension of the chain 15 may be a load sensor for detecting a load value on the lower part of the chain 15 looped over the front sprocket 13 and the rear sprocket 14. When the crank 7 is rotated backward, the lower part of the chain 15 presses the load sensor by using the tension of the lower part of the chain 15. In the case where the tension is not smaller than a predetermined load, it may be decided that the crank 7 has been rotated backward. Furthermore, an increase in the tension of the lower part of the chain 15 may be detected by a chain tensioner to decide a reverse rotation of the crank 7. Alternatively, the hub 9 of the rear wheel 4 may be provided with a torque sensor for deciding a reverse rotation of the crank 7.

The reverse rotation detector may be a combination of a sensor for detecting a crank position and a sensor for detecting a pedal force, and the reverse rotation detector may decide whether a pedal force is applied in a forward direction or a backward direction. An acceleration sensor that detects the acceleration of the electric bicycle 1 and a torque sensor that detects a pedal force may be combined to decide a reverse rotation of the crank 7 when detecting a negative acceleration value and a pedal force. Alternatively, an acceleration sensor that detects the acceleration of the electric bicycle 1 and a crank rotation sensor may be combined to decide a reverse rotation of the crank 7 when detecting a negative acceleration value and a rotation of the crank.

In the present embodiment, when the crank 7 is rotated backward, the control part 11 causes the electric motor 10 to perform a regenerative braking operation to apply a brake and charge the battery. The control of the control part 11 is not particularly limited. The control part 11 may cause the electric motor 10 to perform only a braking operation without a charging operation (regeneration operation). When the crank 7 is rotated backward, the control part 11 may cause the electric motor 10 to immediately perform a stopping operation instead of a regenerative braking operation or a braking operation. In this case, the front wheel 3 is not braked. For example, even when the crank 7 is rotated backward, excessive energy can be reduced as compared with the case where the stopping operation of the electric motor 10 is delayed.

In the present embodiment, the chain 15 is used as an endless driving force transmitting member for transmitting a pedal force from the pedal 8 to the rear wheel 4. The endless driving force transmitting member is not particularly limited. The chain 15 may be replaced with a synchronous belt. In the case where a synchronous belt (driving force transmitting synchronous belt) is used, the rear sprocket 14 may be replaced with a rear gear serving as a rear wheel body.

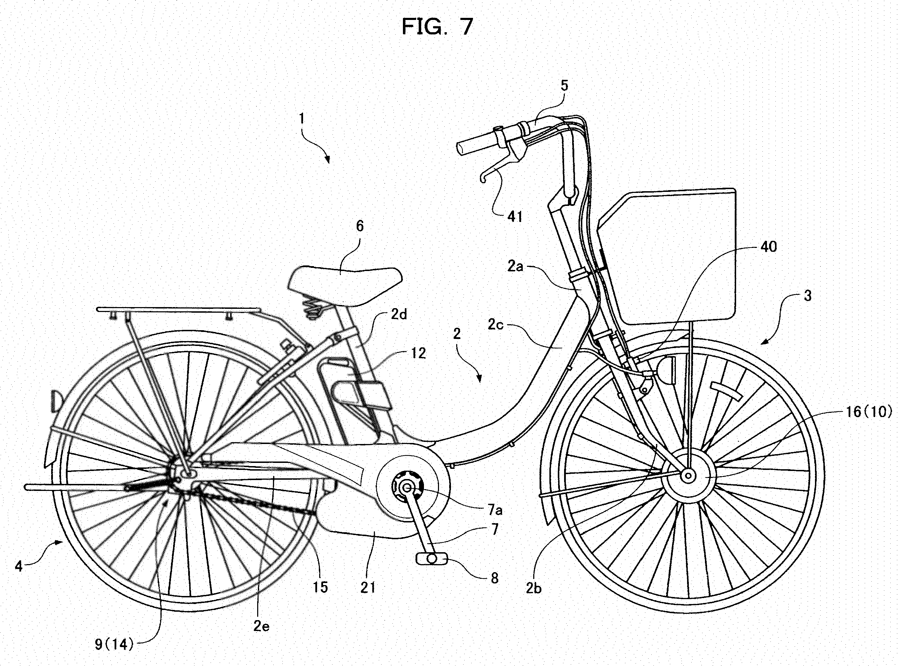

In the present embodiment, only the coaster brake 50 is provided as a braking device. The braking device is not particularly limited. Specifically, in addition to the coaster brake 50 configured thus, the front wheel 3 may include, as simply illustrated in FIG. 7, a braking device 40 activated by operating a brake lever 41 provided on a typical bicycle. Furthermore, the rear wheel 4 may include a braking device (not shown) that is activated by operating the brake lever 41. Also in this configuration, the electric motor 10 may be caused to perform a regeneration operation when the coaster brake 50 is activated.

In this configuration, the coaster brake 50 is basically activated for braking. In case of emergency or in the case where a rider who is not accustomed to the coaster brake 50 temporarily rides the bicycle, the braking device 40 operated with the brake lever 41 is preferably used.

In the case where the front wheel 3 includes, in addition to the coaster brake 50, the braking device activated by operating the brake lever 41 (brake-lever operating braking device), the following configuration may be used: in the case where the brake lever 41 is operated and the pedals 8 are rotated backward to activate the coaster brake 50, a braking force is applied by the regenerative braking operation or the braking operation of the electric motor 10. When only one of the coaster brake 50 and the brake-lever operating braking device is activated, the control part 11 may control the braking force to a force smaller than a braking force applied by the regenerative braking operation or the braking operation of the electric motor 10. In other words, when the coaster brake 50 and the brake-lever operating braking device are both activated, the electric motor 10 further applies a brake to rapidly apply a braking force, increasing the possibility of slipping. In order to prevent such a problem, when both of the coaster brake 50 and the brake-lever operating braking device are operated, a braking force applied by the electric motor 10 is preferably reduced.

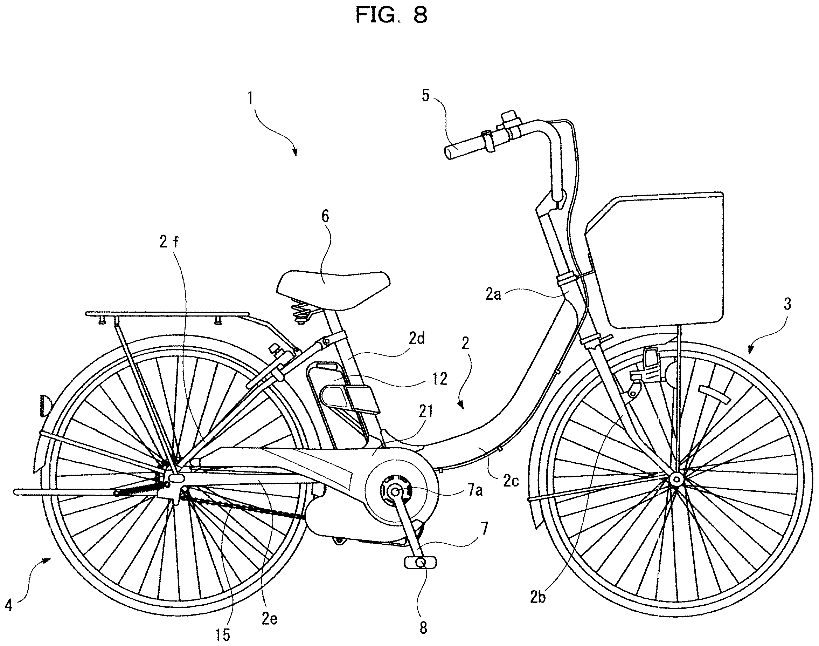

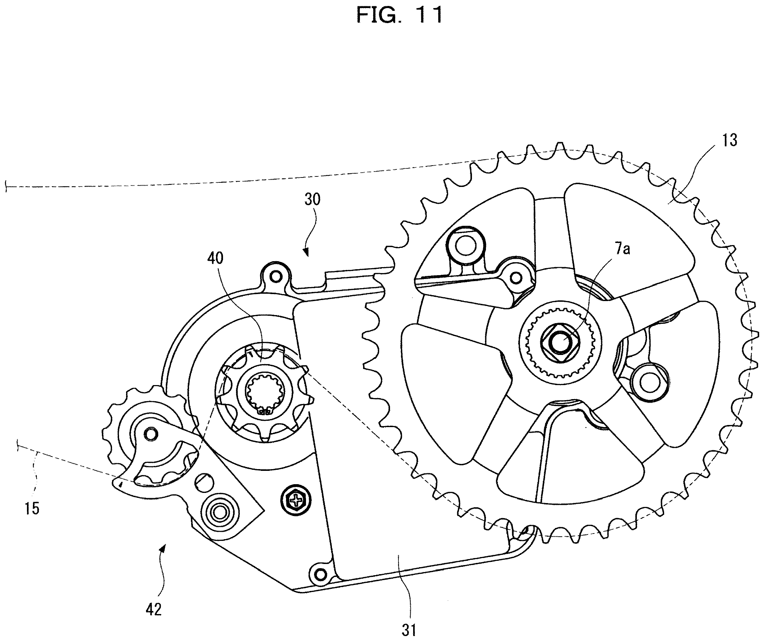

In the present embodiment, the electric motor 10 is contained in the front hub 16 disposed at the center of the front wheel 3. The location of the electric motor 10 is not particularly limited. FIGS. 8 to 11 illustrate an electric bicycle 1 according to another embodiment of the present invention. In this embodiment, as illustrated in FIGS. 8 to 11, an electric motor 10 is contained in a motor driving unit 30 disposed at an intermediate position (specifically, under the intermediate position) between a front wheel 3 and a rear wheel 4. With this configuration, the motor driving unit 30 having a relatively large weight is disposed at the center of the electric bicycle 1 in the longitudinal direction, facilitating lifting of the front wheel 3 and the rear wheel 4 and riding over a step on a path. Thus, the body (including the frame 2) of the electric bicycle 1 can be easily handled with high riding stability.

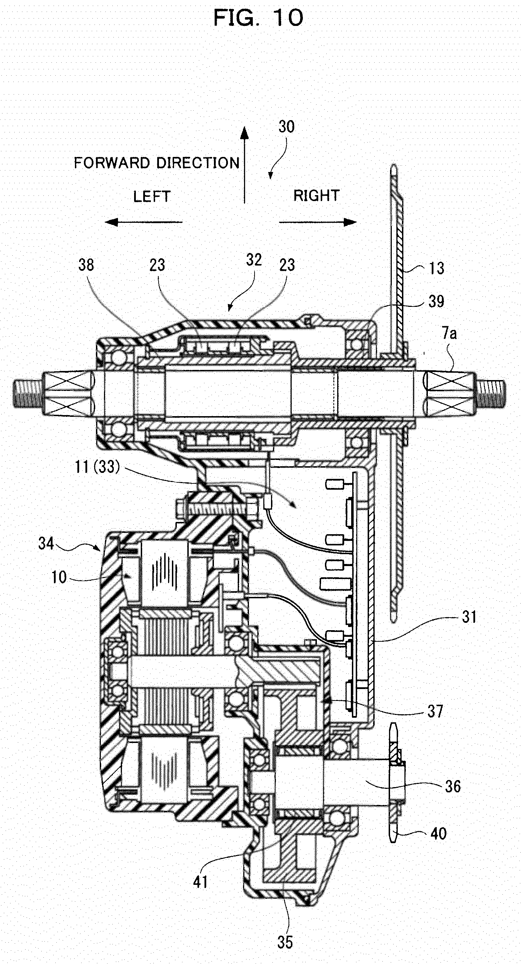

As illustrated in FIG. 10, the motor driving unit 30 includes a unit case 31 that forms an outer shell and a partition wall. The inside of the unit case 31 is divided into a crank shaft placement part 32 that is located at the front of the unit case 31 and contains a rotatably supported crank shaft 7a, a control area unit 33 that is disposed at the center of the unit case 31 in the longitudinal direction and contains a control part 11 provided with a control board and various electronic components, a motor unit 34 that is disposed on the left in the rear of the unit case 31 and contains the electric motor 10, and a speed reducing mechanism unit that contains a speed reducing mechanism 37 composed of a rotatable reduction gear 35 and a rotatable auxiliary-driving-force output shaft 36. The outer surface of the crank shaft 7a at the front of the motor driving unit 30 has a pedal force detector 23 that is provided with a torque sensor for detecting a pedal force on pedals 8 by detecting the torsion of a crank-shaft outer cylinder 38 rotating with the crank shaft 7a, the pedal force detector 23 also acting as a reverse rotation detector, and a traveling speed detector (not shown) that detects the speed of the electric bicycle 1 by detecting the rotation speed of the crank shaft 7a. Reference numeral 39 in FIG. 10 denotes a crank-shaft outer auxiliary cylinder that has one end connected to the crank shaft outer cylinder 38 so as to rotate with the crank shaft outer cylinder 38 and the other end attached to a front sprocket 13.

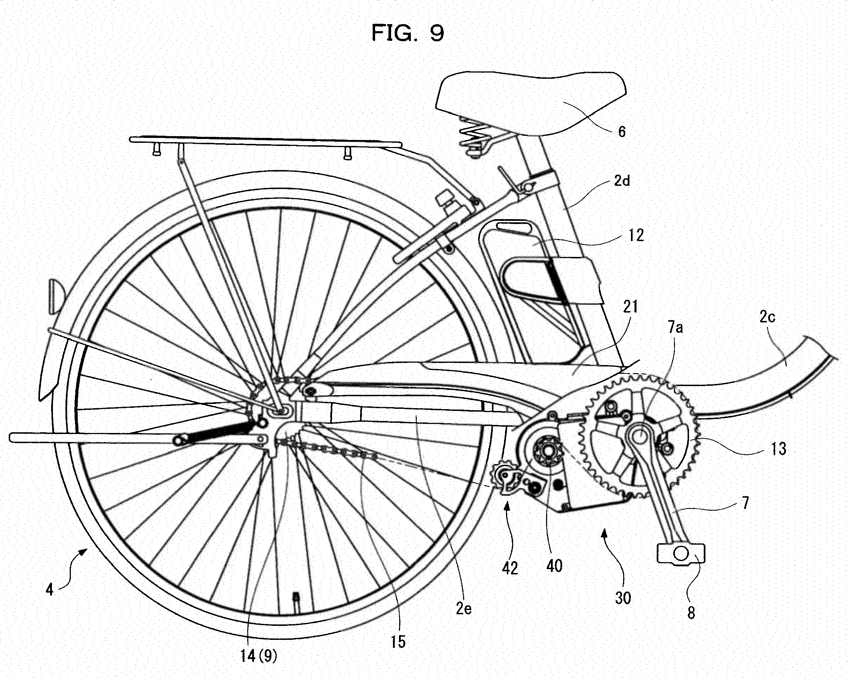

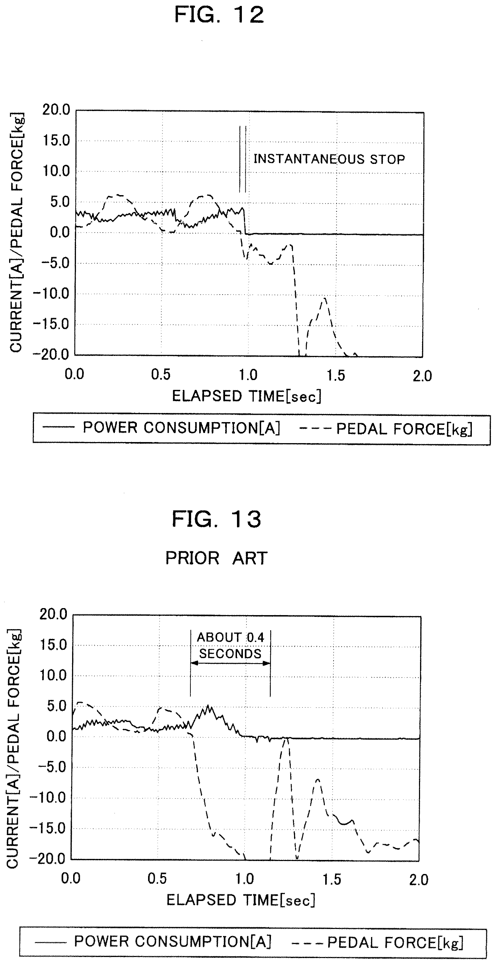

An auxiliary driving sprocket 40 acting as an auxiliary driving wheel body for outputting an auxiliary driving force generated by the electric motor 10 is disposed behind the front sprocket 13 of the motor driving unit 30 such that the auxiliary driving sprocket 40 is attached to the auxiliary-driving-force output shaft 36 protruding out of the motor driving unit 30. The auxiliary driving sprocket 40 is engaged behind the front sprocket 13 so as to lift the lower part of a chain 15, thereby adding an auxiliary driving force to human power. The driving force is then transmitted to the rear wheel 4. In the present embodiment, a one-way clutch mechanism 41 is disposed on an auxiliary-driving-force transmission path between the electric motor 10 and the auxiliary driving sprocket 40, to be specific, between the reduction gear 35 and the auxiliary-driving-force output shaft 36 in the motor driving unit 30. Thus, in the case where the pedals 8 are pressed while the electric motor 10 is not rotated, the application of a load from the electric motor 10 to the pedals 8 is prevented to suppress an excessive pedal force on the pedals 8. Reference numeral 42 in FIGS. 9 and 12 denotes a tensioner device that guides a winding angle, at which the chain 15 is engaged with the auxiliary driving sprocket 40, to a proper larger angle, and absorbs slack of the chain 15 to keep the tension of the chain 15.

With this configuration, in the case where a power supply switch provided on a manual operator is operated by a rider to apply an auxiliary driving force in an assistance state, the control part 11 performs the following control operation:

When the rider presses the pedals 8 in the rotation direction of forward travel, the pedal force detector 23 detects a pedal force and the rotation direction of the pedals 8 (crank shaft 7a) and controls the electric motor 10 so as to output an auxiliary driving force according to the pedal force and the rotation direction. When the traveling speed of the electric bicycle 1 exceeds a predetermined speed, the amount of the applied auxiliary driving force gradually decreases. The auxiliary driving force is controlled so as not to be applied at an upper limit traveling speed or higher.

In the case where the rider stops rotating the pedals 8 during riding, a pedal force of 0 or nearly 0 is obtained. This state is detected by the pedal force detector 23, allowing the control part 11 to control, for example, the electric motor 10 so as not to apply an auxiliary driving force.

In the case where the rider rotates the pedals 8 opposite to the rotation direction of forward travel during riding, the pedal force detector 23 detects a reverse rotation of the crank shaft 7a and a pedal force at that time. A signal of this information is inputted to the control part 11. When receiving the signal of the information on the reverse rotation of the crank shaft 7a from the pedal force detector 23, the control part 11 controls the electric motor 10 to immediately (instantly) stop as illustrated in FIG. 12. Hence, a coaster brake 50 is activated after the electric motor 10 is instantly stopped.

With this configuration, when the pedals 8 are rotated backward, the application of an extremely large load to the rider's feet through the pedals 8 can be prevented, thereby reducing a load to the rider's feet.

Specifically, in the case of a typical electric bicycle that does not include the coaster brake 50 but applies a brake by a brake lever operation, the pedals 8 are hardly rotated backward during riding. Moreover, the one-way clutch is disposed between the rear sprocket and the hub of the rear wheel 4, thereby hardly transmitting a reverse rotation force to the rear wheel 4. When the rider stops pedaling to obtain a pedal force of 0 (or a small value close to 0), the electric motor 10 is controlled so as to be immediately stopped. Thus, a certain impact (so-called uncomfortable feeling) on the pedals 8 may be caused by a rapid stop of the electric motor 10, or an impact on the pedals 8 may lead to repeated ON and OFF operations (so-called jerky movement). Hence, generally, the stopping operation of the electric motor 10 at this point is delayed (e.g., by 0.4 seconds) to maximize smoothness.

In the case where the control method is similarly applied to a reverse rotation of the pedals 8 during riding, however, the electric motor 10 rotates in a forward direction (a rotation direction in which an auxiliary driving force is outputted) even at a moment when the pedals 8 rotate backward. Thus, as shown in FIG. 13, a large reaction force is generated by the electric motor 10 in response to a pedaling operation of the rider during the delay time, applying an extremely large load to the rider's feet.

Hence, in order to address the problem, when a signal of information on a reverse rotation of the crank shaft 7a is inputted from the pedal force detector 23, the electric motor 10 is controlled so as to be immediately (instantly) stopped. Thus, the electric motor 10 is immediately stopped to prevent the application of an extremely large load to the rider's feet through the pedals 8 when the pedals 8 are rotated backward, thereby reducing a load to the rider's feet. This configuration can immediately stop an unnecessary rotation of the electric motor 10, advantageously reducing excessive energy.

In this case, more preferably, a threshold value (a threshold value for stopping the electric motor, e.g., - 3.0 kg) for immediately stopping the electric motor 10 is provided as a pedal force value in a backward direction. When an applied pedal force is smaller than the pedal force in the backward direction, it is decided that the rider has intentionally rotated the pedals 8 backward, so that the electric motor 10 is immediately stopped. In other words, even when the pedals 8 are stopped to enable coasting during riding, the pedals 8 may be rotated backward. In this case, a pedal force for a reverse rotation is not so large and thus a value is set equal to or smaller than the threshold value. Thus, during the coasting, the electric motor 10 is not rapidly stopped and the stopping operation of the electric motor 10 is delayed. Consequently, a certain impact (so-called uncomfortable feeling) applied to the pedals 8 by a rapid stop of the electric motor 10 can be prevented, and ON/OFF operations (so-called jerky movement) repeated by an impact on the pedals 8 can be also prevented.

### Industrial Applicability

The present invention is applicable to various electric bicycles that can be driven by an auxiliary driving force generated by an electric motor in addition to human power generated by a pedal force from pedals, and can perform a regenerative braking operation, a braking operation, or a stopping operation by means of the electric motor.

## Claims

1. An electric bicycle (1) comprising:
an electric motor (10) that generates an auxiliary driving force;
a coaster brake (50) that is disposed in a hub (9) of a rear wheel (4) and is activated when pedals (8) are rotated in a direction opposite to forward travel,
a control unit (11),
a crank shaft outer cylinder (38) that is rotating with a crank shaft (7a),
a human power output ring body (13) over which an endless driving force transmitting member (15) is looped, and wherein that the control unit (11) is adapted to cause the electric motor (10) to perform one of a regenerative braking operation, a braking operation, and a stopping operation to stop the electric motor (10) when the coaster brake (50) is activated,
that the human power output ring body (13) is attached so as to rotate with a crank shaft (7a) even when the pedals (8) are rotated in the direction opposite to the forward travel as well as when the pedals (8) are rotated in a direction of forward travel, and **characterised in that** the electric bicycle (1) further comprises a reverse rotation detector that detects a reverse rotation of the pedal (8), and
that a threshold value is set for a pedal force applied when the pedals (8) are rotated backward, and the control unit (11) stops the electric motor (10) immediately when the reverse rotation of the pedal (8) is detected with a pedal force larger than the threshold value.

2. The electric bicycle (1) according to claim 1, wherein the electric motor (10) is disposed in a hub (16) of a front wheel (3), and the control unit (11) causes the electric motor (10) to perform one of a regenerative braking operation and a braking operation when the coaster brake (50) is activated.

3. The electric bicycle (1) according to claim 1,
wherein the reverse rotation detector is one of a torque sensor attached to a location of a crank shaft (7a), a crank rotation sensor that detects a rotation direction of the crank shaft (7a), a torque sensor that is attached to a rear wheel body on the hub (9) of the rear wheel (4), a rear wheel body rotation sensor that detects a rotation direction of the rear wheel body attached to the hub (9) of the rear wheel (4), a tension sensor that detects tension of an endless driving force transmitting member for transmitting a pedal force on the pedal (8) to the rear wheel (4), a hub shaft torque sensor that detects torque of a hub shaft (24) of the rear wheel (4), and an acceleration sensor that detects acceleration of the electric bicycle (1).

4. The electric bicycle (1) according to claim 1, further comprising a storage battery (12) as a power supply of the electric motor (10),
wherein the storage battery (12) is charged by the regenerative braking operation of the electric motor (10).

5. The electric bicycle (1) according to claim 1, wherein the electric motor (10) is located at an intermediate position between a front wheel (3) and the rear wheel (4).

## Patentansprüche

1. Elektrofahrrad (1), das umfasst:
einen Elektromotor (10), der eine Hilfs-Antriebskraft erzeugt;
eine Rücktrittbremse (50), die in einer Nabe (9) eines Hinterrades (4) angeordnet ist und aktiviert wird, wenn Pedale (8) in einer Richtung entgegengesetzt zu Vorwärtsfahrt gedreht werden,
eine Steuer-Einheit (11),
einen Kurbelwellen-Außenzylinder (38), der sich mit einer Kurbelwelle (7a) dreht,
einen Ringkörper (13) zur Ausgabe von Muskelkraft, um den ein Endlos-Antriebskraft-Übertragungselement (15) läuft,
wobei die Steuer-Einheit (11) so eingerichtet ist, dass sie den Elektromotor (10) veranlasst, einen regenerativen Bremsvorgang, einen Bremsvorgang oder einen Anhaltevorgang zum Anhalten des Elektromotors (10) durchzuführen, wenn die Rücktrittbremse (50) aktiviert wird,
der Ringkörper (13) zur Ausgabe von Muskelkraft so installiert ist, dass er sich sowohl dann, wenn die Pedale (8) in der Richtung entgegengesetzt zu der Vorwärtsfahrt gedreht werden, als auch dann mit einer Kurbelwelle (7a) dreht, wenn die Pedale (8) in einer Richtung von Vorwärtsfahrt gedreht werden,
**dadurch gekennzeichnet, dass**
das Elektrofahrrad (1) des Weiteren einen Rückwärtsdrehungs-Detektor umfasst, der eine Rückwärtsdrehung des Pedals (8) erfasst,
ein Schwellenwert für eine Pedalkraft festgelegt ist, die ausgeübt wird, wenn die Pedale (8) rückwärts gedreht werden, und die Steuer-Einheit (11) den Elektromotor (10) sofort anhält, wenn die Rückwärtsdrehung des Pedals (8) mit einer über dem Schwellenwert liegenden Pedalkraft erfasst wird.

2. Elektrofahrrad (1) nach Anspruch 1, wobei der Elektromotor (10) in einer Nabe (16) eines Vorderrades (3) angeordnet ist und die Steuer-Einheit (11) den Elektromotor (10) veranlasst, einen regenerativen Bremsvorgang oder einen Bremsvorgang durchzuführen, wenn die Rücktrittbremse (50) aktiviert wird.

3. Elektrofahrrad (1) nach Anspruch 1,
wobei der Rückwärtsdrehungs-Detektor ein Drehmoment-Sensor, der an einer Position einer Kurbelwelle (7a) angebracht ist, ein Kurbeldrehungs-Sensor, der eine Drehrichtung der Kurbelwelle (7a) erfasst, ein Drehmoment-Sensor, der an einem Hinterradkörper an der Nabe (9) des Hinterrades (4) angebracht ist, ein Hinterradkörperdrehungs-Sensor, der eine Drehrichtung des an der Nabe (9) des Hinterrades (4) angebrachten Hinterradkörpers erfasst, ein Spannungs-Sensor, der Spannung eines Endlos-Antriebskraft-Übertragungselementes zum Übertragen einer Pedalkraft an dem Pedal (8) auf das Hinterrad (4) erfasst, ein Nabenwellen-Drehmoment-Sensor, der Drehmoment einer Nabenwelle (24) des Hinterrades (4) erfasst, oder ein Beschleunigungs-Sensor ist, der Beschleunigung des Elektrofahrrades (1) erfasst.

4. Elektrofahrrad (1) nach Anspruch 1, das des Weiteren eine Speicherbatterie (12) als eine Stromquelle des Elektromotors (10) umfasst,
wobei die Speicherbatterie (12) durch den regenerativen Bremsvorgang des Elektromotors (10) geladen wird.

5. Elektrofahrrad (1) nach Anspruch 1, wobei der Elektromotor (10) an einer Zwischenposition zwischen einem Vorderrad (3) und dem Hinterrad (4) angeordnet ist.

## Revendications

1. Vélo électrique (1) comprenant :
un moteur électrique (10) qui génère une force d'entraînement auxiliaire ;
un frein à rétropédalage (50) qui est disposé dans un moyeu (9) d'une roue arrière (4) et est activé quand les pédales (8) sont tournées en direction opposée à la marche avant,
une unité de contrôle (11),
un cylindre externe d'axe de pédalier (38) qui tourne avec un axe de pédalier (7a),
un corps annulaire de sortie de force humaine (13) autour duquel est enroulé un élément de transmission de force d'entraînement sans fin (15),
et dans lequel
l'unité de contrôle (11) est adaptée pour commander au moteur électrique (10) d'exécuter une opération parmi une opération de freinage régénératif, une opération de freinage, et une opération d'arrêt pour arrêter le moteur électrique (10) quand le frein à rétropédalage (50) est activé,
le corps annulaire de sortie de force humaine (13) est attaché de manière à tourner avec un axe de pédalier (7a) quand les pédales (8) sont tournées en direction opposée à la marche avant ainsi que quand les pédales (8) sont tournées en direction de la marche avant,
et **caractérisé en ce que**
le vélo électrique (1) comprend en outre un détecteur de rotation inverse qui détecte une rotation inverse de la pédale (8), et
une valeur seuil est réglée pour une force de pédale appliquée quand les pédales (8) sont tournées en marche arrière, et l'unité de contrôle (11) arrête le moteur électrique (10) immédiatement quand la rotation inverse de la pédale (8) est détectée avec une force de pédale supérieure à la valeur seuil.

2. Vélo électrique (1) selon la revendication 1, dans lequel le moteur électrique (10) est disposé dans un moyeu (16) d'une roue avant (3), et l'unité de contrôle (11) commande au moteur électrique (10) d'exécuter une opération parmi une opération de freinage régénératif et une opération de freinage quand le frein à rétropédalage (50) est activé.

3. Vélo électrique (1) selon la revendication 1, dans lequel le détecteur de rotation inverse est un détecteur parmi un capteur de couple attaché à un emplacement d'un axe de pédalier (7a), un capteur de rotation de pédalier qui détecte la direction de rotation de l'axe de pédalier (7a), un capteur de couple qui est attaché à un corps de roue arrière sur le moyeu (9) de la roue arrière (4), un capteur de rotation de corps de roue arrière qui détecte la direction de rotation du corps de roue arrière attaché au moyeu (9) de la roue arrière (4), un capteur de tension qui détecte la tension d'un élément de transmission de force d'entraînement sans fin servant à transmettre une force de pédale appliquée sur la pédale (8) à la roue arrière (4), un capteur de couple d'axe de moyeu qui détecte le couple d'un axe de moyeu (24) de la roue arrière (4), et un capteur d'accélération qui détecte une accélération du vélo électrique (1).

4. Vélo électrique (1) selon la revendication 1, comprenant en outre une batterie de stockage (12) comme alimentation du moteur électrique (10), dans lequel la batterie de stockage (12) est chargée par l'opération de freinage régénératif du moteur électrique (10).

5. Vélo électrique (1) selon la revendication 1, dans lequel le moteur électrique (10) se trouve dans une position intermédiaire entre une roue avant (3) et la roue arrière (4).
